# DEMANDE DE BREVET EUROPEEN

(11) **EP 4 803 340 A1**
(43) Date de publication de la demande: **09.09.2026**
(21) Numéro de dépôt: 26162688.1
(22) Date de dépôt: 05.03.2026
(51) Int. Cl.: B60K 15/05, B62D 25/24

(54) **DISPOSITIF D ACCÈS POUR UNE OUVERTURE FORMÉE DANS UNE PAROI D'UNE PIÈCE D'UN VÉHICULE AUTOMOBILE ET VÉHICULE AUTOMOBILE**

(30) Priorité: 06.03.2025 FR 2502267
(71) Demandeur: Flexis, 92100 Boulogne Billancourt (FR)
(72) Inventeur: RAMOS, Alberto, 78640 VILLIERS SAINT-FREDERIC (FR)
(74) Mandataire: Lavoix

(57) **Abrégé**

Le dispositif d'accès (18) comprend :
- une trappe d'accès (20) configurée pour obturer l'ouverture (12) lorsque le dispositif d'accès (18) est en position fermée, et configurée pour libérer ladite ouverture (12) et donner accès à un logement (14) lorsque le dispositif d'accès (18) est en position ouverte;
- un élément de retenue (30) de la trappe d'accès (20), comprenant une première extrémité (31) fixée à la trappe d'accès (20) et une deuxième extrémité (32) configurée pour coopérer avec le logement (14) ;
le dispositif d'accès (18) étant caractérisé en ce que la deuxième extrémité (32) de l'élément de retenue (30) est fixée à une paroi intérieure (16) du logement (14) de sorte que l'élément de retenue (30) soit tendu lorsque le dispositif d'accès (18) est en position fermée.

## Description

La présente invention concerne le domaine des trappes d'accès pour des pièces de véhicule automobile comportant une ouverture, notamment des trappes permettant de couvrir des ouvertures d'accès dans des pièces de carrosserie. En particulier, l'invention concerne un dispositif d'accès pour une ouverture formée dans une paroi d'une pièce d'un véhicule automobile. L'invention concerne en outre un véhicule automobile équipé d'un tel dispositif d'accès.

Les carrosseries des véhicules automobiles sont généralement équipées d'ouvertures recouvertes par des trappes d'accès. On connait par exemple les trappes qui recouvrent une ouverture donnant accès à un réservoir de carburant, ces trappes sont généralement mobiles en rotation autour d'une liaison pivot formée par exemple par une charnière.

On connait également des véhicules automobiles comprenant un anneau de remorquage fixé sur la poutre de pare-chocs avant. Une ouverture est alors ménagée dans une pièce de carrosserie pour permettre un accès à l'anneau de remorquage en cas de besoin, par exemple pour remorquer le véhicule lorsque celui-ci est en panne. Lorsque l'anneau de remorquage n'est pas utilisé, une trappe recouvre l'ouverture dans laquelle se situe l'anneau.

Afin de relier cette trappe à la carrosserie du véhicule, il existe par exemple des élément de retenue destinés à être introduits dans un passage de retenue prévu à cet effet. L'élément de retenue est pourvu à son extrémité libre d'une ancre de retenue, qui retient la trappe pour éviter qu'elle ne se décroche du véhicule lorsque la trappe n'obture plus l'ouverture dans la carrosserie dudit véhicule.

Toutefois, les techniques utilisées pour fixer ces trappes d'accès au véhicule ne s'avèrent pas pleinement satisfaisantes : elles peuvent être encombrantes et/ou gênantes. En particulier, l'élément de retenue peut gêner l'utilisateur au moment de refermer la trappe. L'élément de retenue peut parfois se retrouver coincé entre le bord de l'ouverture dans la carrosserie et le bord de la trappe, créant ainsi un obstacle à la fermeture de la trappe. Ou alors, dans le cas où une extrémité libre de l'élément de retenue équipée d'une ancre de retenue doit être inséré dans un logement, la manipulation dudit élément de retenue peut s'avérer fastidieuse pour l'utilisateur.

KR 2010 0018351 A décrit un dispositif d'accès pour une ouverture dans une paroi d'un véhicule automobile, comprenant une trappe apte à obturer l'ouverture en position fermée et à libérer l'accès à un logement en position ouverte. Ce dispositif prévoit un élément de retenue dont une extrémité est montée coulissante sur la trappe au moyen d'un élément élastique et d'un rail, l'autre extrémité étant fixée au logement, de sorte que l'élément est mis sous tension lorsque la trappe est fermée.

DE 102 53 881 A1 divulgue une trappe destinée à obturer une ouverture formée dans une paroi d'un véhicule automobile, la trappe étant montée pivotante autour d'un axe et apte à se verrouiller dans un cadre entourant l'ouverture. La trappe comprend un couvercle articulé et un élément interne, tel qu'un ergot ou un tenon, conçu pour s'engager dans une ouverture complémentaire afin d'assurer la fermeture.

KR 2010 0018833 A concerne un dispositif anti-perte pour bouchon de réservoir de carburant d'un véhicule automobile, visant à empêcher la perte du bouchon tout en améliorant la facilité de ravitaillement, au moyen d'un poids fixé sur une sangle de retenue reliant le bouchon à la carrosserie.

Le but de l'invention est de remédier aux inconvénients décrits ci-dessus en proposant une solution pratique, économique et fiable, avec un nombre limité de pièces.

A cet effet, l'invention porte sur un dispositif d'accès pour une ouverture formée dans une paroi d'une pièce d'un véhicule automobile, notamment une paroi de carrosserie, l'ouverture formant un accès vers un logement à l'intérieur de la pièce du véhicule automobile, le dispositif d'accès comprenant :
- une trappe d'accès configurée pour obturer l'ouverture dans la paroi de la pièce du véhicule automobile lorsque le dispositif d'accès est en position fermée, et configurée pour libérer ladite ouverture donnant accès au logement lorsque le dispositif d'accès est en position ouverte;
- un élément de retenue de la trappe d'accès, l'élément de retenue comprenant une première extrémité fixée à la trappe d'accès et une deuxième extrémité configurée pour coopérer avec le logement ;
le dispositif d'accès étant caractérisé en ce que la deuxième extrémité de l'élément de retenue est fixée à une paroi intérieure du logement de sorte que l'élément de retenue soit tendu lorsque le dispositif d'accès est en position fermée.

Selon un mode de réalisation :
- la trappe d'accès présente un bord supérieur et un bord inférieur du côté opposé au bord supérieur, et en ce que la première extrémité de l'élément de retenue est fixée dans une zone contigüe au bord supérieur de la trappe d'accès et/ou en ce que la deuxième extrémité de l'élément de retenue est fixée à la paroi intérieure du logement dans la pièce du véhicule dans une région contigüe au bord de l'ouverture ;
- la première extrémité de l'élément de retenue fixée à la trappe d'accès est agencée en vis-à-vis de la deuxième extrémité fixée à la paroi intérieure du logement de sorte qu'en position fermée, l'élément de retenue s'étend dans une zone médiane de la trappe d'accès ;
- l'élément de retenue présente une forme allongée et/ou aplatie ;
- la trappe d'accès présente une face interne destinée à être orientée vers l'intérieur du logement lorsque le dispositif d'accès est en position fermée et destinée à être orientée vers une face externe de la pièce du véhicule automobile lorsque le dispositif d'accès est en position ouverte, la trappe d'accès comprenant au moins un élément de protection agencée sur ladite face interne ;
- les extrémités de l'élément de retenue et/ou une portion intermédiaire située entre les extrémités de l'élément de retenue sont renforcées ;
- la première extrémité et/ou la deuxième extrémité de l'élément de retenue présente un œillet configuré pour fixer la ou les extrémités de l'élément de ;
- l'élément de retenue comprend un matériau textile ;
- l'élément de retenue comprend un matériau polymère tel que du polyoxyméthylène.

L'invention porte également sur un véhicule automobile caractérisé en ce qu'il comprend une pièce comprenant une paroi dans laquelle est agencée une ouverture formant un accès vers un logement à l'intérieur de la pièce et en ce qu'il comprend un dispositif d'accès ayant les caractéristiques ci-dessus pour ladite ouverture, la deuxième extrémité de l'élément de retenue étant fixée à une paroi intérieure dudit logement de sorte que l'élément de retenue soit tendu lorsque le dispositif d'accès est en position fermée.

Ces objets, caractéristiques et avantages de la présente invention seront exposés en détail dans la description suivante d'un mode de réalisation particulier fait à titre non-limitatif en relation avec les figures jointes parmi lesquelles :
[Fig 1] La figure 1 est une vue en coupe schématique d'un dispositif d'accès selon un mode de réalisation préférentiel en position fermée.
[Fig 2] La figure 2 est une vue en coupe schématique du dispositif d'accès de la figure 1 en position ouverte.

Dans cette description, les termes « premier » et « deuxième », etc. ne visent pas à impliquer ou à créer un ordre particulier des éléments, ni à limiter un élément à un seul élément, sauf indication expresse, par exemple en utilisant les termes « avant », « après », « unique » et d'autres termes de ce type. L'utilisation de ces termes sert plutôt à distinguer les éléments entre eux. À titre d'exemple, un premier élément est distinct d'un deuxième élément, et le premier élément peut englober plus d'un élément et succéder (ou précéder) le deuxième élément dans un ordre d'éléments.

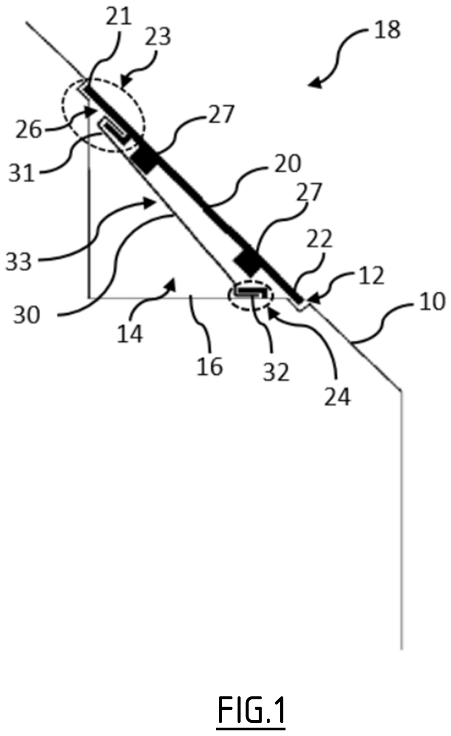

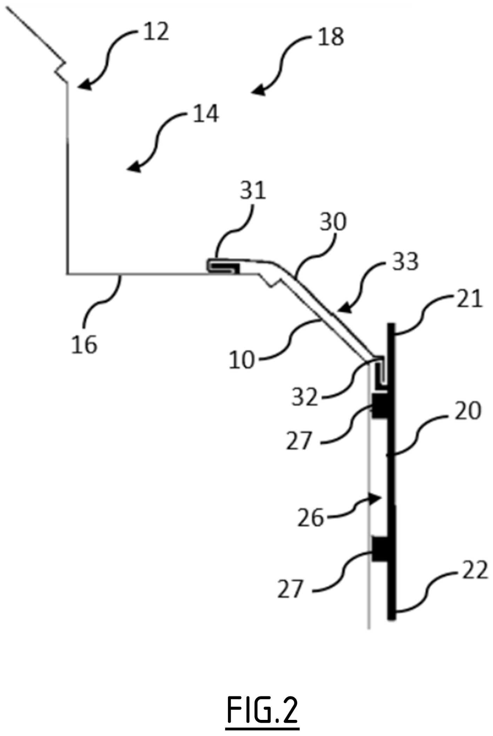

Les figures 1 et 2 illustrent schématiquement une portion d'une pièce 10 d'un véhicule automobile. Cette pièce 10 peut par exemple être une pièce 10 de carrosserie, notamment un bouclier du véhicule automobile, toutefois d'autres types de pièces 10 peuvent être envisagées. La pièce 10 du véhicule comprend une paroi dans laquelle est formée une ouverture 12. L'ouverture 12 formée dans la paroi de la pièce 10 du véhicule forme un accès vers un logement 14 à l'intérieur de ladite pièce 10. L'ouverture 12 permet par exemple l'accès à un réservoir de liquide, notamment un réservoir de liquide lave-glace, ou un réservoir de carburant. Toutefois, une telle ouverture 12 peut être envisagée pour d'autres applications, elle peut par exemple permettre un accès à un anneau de remorquage dans un bouclier avant ou arrière d'un véhicule.

Un dispositif d'accès 18 est prévu afin de protéger l'ouverture 12 et le logement 14 contre l'introduction de corps étrangers. Ce dispositif d'accès 18 comprend une trappe d'accès 20 configurée pour obturer l'ouverture 12 dans la paroi de la pièce 10 du véhicule automobile lorsque le dispositif d'accès 18 est en position fermée.

Cette position fermée du dispositif d'accès 18 est plus particulièrement illustrée sur la figure 1. La trappe d'accès 20 se présente par exemple sous la forme d'une plaque qui peut être de forme elliptique ou polygonale. L'ouverture 12 formée dans la paroi de la pièce 10 du véhicule et les bords de la trappe d'accès 20, voire la trappe d'accès 20 entière de manière générale, sont formées de sorte que la trappe d'accès 20 puisse être intégrée de manière sensiblement affleurante avec la surface extérieure de la pièce 10 du véhicule. Ceci est notamment illustré sur la figure 1. En particulier, la trappe d'accès 20 peut être plane, ou alors elle peut présenter une ou plusieurs courbures, de sorte à former une continuité avec la surface extérieure de la pièce 10 du véhicule lorsque le dispositif d'accès 18 est en position fermée.

La trappe d'accès 20 est également configurée pour libérer, en position ouverte, ladite ouverture 12 donnant accès au logement 14. La position ouverte est illustrée sur la figure 2. Pour éviter une perte de la trappe d'accès 20 lorsque celle-ci ne recouvre pas l'ouverture 12 formée dans la paroi de la pièce 10 du véhicule, le dispositif d'accès 18 comprend également un élément de retenue 30 de ladite trappe d'accès 20.

Selon un mode de réalisation préférentiel, l'élément de retenue 30 présente une forme allongée, notamment une forme longiligne. Dans ce mode de réalisation, la longueur de l'élément de retenue 30 est largement supérieure à ses dimensions transversales, c'est-à-dire que la longueur de l'élément de retenue 30 est largement supérieure à la largeur et à l'épaisseur dudit élément de retenue 30. L'élément de retenue 30 s'apparente alors à un cordon.

En complément ou alternativement, l'élément de retenue 30 peut présenter une forme aplatie, il s'apparente alors à une sangle ou à une lanière. Dans ce mode de réalisation, la largeur de l'élément de retenue 30 est supérieure à son épaisseur. La forme aplatie de l'élément de retenue 30 lui confère un bon compromis entre solidité et compacité. Par ailleurs, une forme aplatie peut empêcher un vrillement de l'élément de retenue 30 lorsque la trappe d'accès 20 est en position ouverte.

Divers matériaux peuvent être envisagés pour l'élément de retenue 30. L'élément de retenue 30 peut par exemple comprendre un matériau textile. Selon un mode de réalisation, au moins une partie de l'élément de retenue 30 peut se présenter sous la forme d'une sangle tressée. Un tel matériau pour l'élément de retenue 30 permet d'éviter une agression de la carrosserie lorsque l'élément de retenue 30 entre en contact avec ladite carrosserie, quand la trappe d'accès 20 est en position ouverte.

Par ailleurs, une sangle tressée peut conférer une certaine élasticité à l'élément de retenue 30 : celui-ci peut par exemple tolérer un certain allongement dans le sens de sa longueur, ce qui peut faciliter l'installation de la trappe d'accès 20 sur l'ouverture 12 en autorisant une certaine tension sur l'élément de retenue 30 lorsque le dispositif d'accès 18 est en position fermée.

De manière générale, un matériau textile présente l'avantage d'être léger, robuste et économique. Il peut par ailleurs s'agir d'un matériau souple, ce qui confère une certaine flexibilité à l'élément de retenue 30. La souplesse et/ou la flexibilité du matériau de l'élément de retenue 30 peut être telle que l'élément de retenue 30 puisse être courbé, sans se casser, de sorte à dépasser de l'ouverture 12 lorsque le dispositif de retenue 18 est en position ouverte. Dans le mode de réalisation illustré sur la figure 2, la souplesse et/ou la flexibilité du matériau de l'élément de retenue 30 permet à l'élément de retenue 30 de suivre la géométrie de la face extérieure de la pièce 10. En outre, un matériau textile permet de conférer une forme plate et peu épaisse à l'élément de retenue 30, ce qui permet de dégager l'accès vers le logement 14 à l'intérieur de ladite pièce 10.

En complément ou alternativement, au moins une partie de l'élément de retenue 30 peut comprendre un matériau polymère tel que du polyoxyméthylène, ou tout autre matériau similaire. Le polyoxyméthylène est un matériau peu agressif, il est donc adapté à l'utilisation visée dans le cadre de cette invention, car il permet d'éviter une dégradation de la surface extérieure de la pièce 10 au cas où l'élément de retenue 30 entre en contact avec ladite surface de la pièce 10 du véhicule.

En particulier, l'élément de retenue 30 peut se présenter sous la forme d'une sangle tressée partiellement ou entièrement recouverte d'une couche de polyoxyméthylène, ou partiellement ou entièrement recouverte d'une couche d'un matériau polymère similaire au polyoxyméthylène.

D'une manière commune à tous les modes de réalisation, l'élément de retenue 30 comprend une première extrémité 31 fixée à la trappe d'accès 20 et une deuxième extrémité 32 configurée pour coopérer avec le logement 14. Plus particulièrement, la deuxième extrémité 32 est configurée pour demeurer dans l'enceinte du logement 14. Pour ce faire, la deuxième extrémité 32 de l'élément de retenue 30 est fixée à une paroi intérieure du logement 14. Autrement dit, l'élément de retenue 30 est fixé d'une part à la trappe d'accès 20 et d'autre part à la paroi intérieure du logement 14. La trappe d'accès 20 est alors retenue à une paroi intérieure 16 du logement 14 par l'élément de retenue 30, de sorte à rendre la trappe d'accès 20 imperdable. L'élément de retenue 30 assure donc un lien permanent ou quasi-permanent entre la trappe d'accès 20 et le réservoir équipé d'une telle trappe 20. Ceci permet d'éviter une perte de la trappe d'accès 20 lorsque le dispositif d'accès 18 occupe sa position ouverte.

Selon un mode de réalisation préférentiel illustré sur les figures 1 et 2, la trappe d'accès 20 présente notamment une face interne 26 destinée à être orientée vers l'intérieur du logement 14 lorsque le dispositif d'accès 18 est en position fermée, comme illustré sur la figure 1. Cette même face interne 26 de la trappe d'accès 20 est destinée à être orientée vers la carrosserie du véhicule automobile lorsque le dispositif d'accès 18 est en position ouverte, comme illustré sur la figure 2. La première extrémité 31 de l'élément de retenue 30 est par exemple fixée sur cette face interne 26 de la trappe d'accès 20.

Dans le mode de réalisation illustré sur les figures 1 et 2, la trappe d'accès 20 présente un bord supérieur 21 et un bord inférieur 22 du côté opposé au bord supérieur 21. Selon un mode de réalisation préférentiel, la première extrémité 31 de l'élément de retenue 30 est fixée dans une zone 23 contigüe au bord supérieur 21 de la trappe d'accès 20. Sur la figure 1, la zone 23 contigüe au bord supérieur 21 de la trappe d'accès 20 est entourée avec une ligne en pointillés.

Alternativement, la première extrémité 31 de l'élément de retenue 30 peut être fixée sur le bord supérieur 21 de la trappe d'accès 20. D'autres endroits de la trappe d'accès 20, en particulier sur la face interne 26, peuvent être envisagés pour y fixer la première extrémité 31 de l'élément de retenue 30.

D'une manière commune à tous les modes de réalisation, la deuxième extrémité 32 de l'élément de retenue 30 est fixée à la paroi intérieure du logement 14. Selon un mode de réalisation préférentiel illustré sur les figures 1 et 2, la deuxième extrémité 32 de l'élément de retenue 30 est plus particulièrement fixée dans une région 24 contigüe au bord de l'ouverture 12. Dans ce mode de réalisation préférentiel, la deuxième extrémité 32 de l'élément de retenue 30 est donc très proche du bord inférieur 22 de la trappe d'accès 20 lorsque le dispositif d'accès est en position fermée. Sur la figure 1, la région 24 contigüe au bord de l'ouverture 12 est entourée avec une ligne en pointillés. D'autres endroits de la paroi intérieure du logement 14 peuvent être envisagés pour y fixer la deuxième extrémité 32 de l'élément de retenue 30.

Par ailleurs, la deuxième extrémité 32 de l'élément de retenue 30 est fixée à la paroi intérieure du logement 14 de sorte que l'élément de retenue 30 soit tendu lorsque le dispositif d'accès 18 est en position fermée. Ainsi, les emplacements des extrémités 31, 32 de l'élément de retenue 30 par rapport au bords 21, 22 de la trappe d'accès 20, et par rapport au bord de l'ouverture 12, permettent d'obtenir aisément une tension sur l'élément de retenue 30 lorsque le dispositif d'accès 18 occupe sa position fermée, dans laquelle il obture l'accès à l'ouverture 12 dans la pièce 10 du véhicule. La tension ainsi exercée sur l'élément de retenue 30 peut contribuer au maintien de la trappe 20 lorsque le dispositif d'accès 18 est en position fermée, de sorte à éviter une ouverture non désirée du dispositif d'accès 18.

Par ailleurs, cette même tension exercée sur l'élément de retenue 30 permet d'éviter que celui-ci ne se plie, ne s'enroule, ou ne se courbe au moment de replacer la trappe d'accès 20 sur l'ouverture 12, ce qui facilite sa manipulation.

Lorsque le dispositif d'accès 18 est en position fermée, l'élément de retenue 30 peut s'étendre de manière sensiblement parallèle au plan de la trappe d'accès 20, comme illustré sur la figure 1. Notons que lorsque le dispositif d'accès 18 est en position fermée, seule une face externe de la trappe d'accès 20 est visible pour un observateur externe ; la trappe d'accès 20 cache ainsi l'ouverture 12 et l'élément de retenue 30 qui se situe alors l'intérieur du logement 14. Autrement dit, l'élément de retenue 30 n'est pas visible pour un observateur externe lorsque le dispositif d'accès 18 est en position fermée.

Selon un mode de réalisation préférentiel, la première extrémité 31 de l'élément de retenue 30 fixée à la trappe d'accès 20 est agencée en vis-à-vis de la deuxième extrémité 32 fixée à la paroi intérieure du logement 14 de sorte qu'en position fermée, l'élément de retenue 30 s'étend dans une zone médiane de la trappe d'accès 20. Plus particulièrement, la première extrémité 31 de l'élément de retenue 30 peut être fixée au milieu, ou du moins à proximité du milieu du bord supérieur 21 de la trappe d'accès 20, tandis que le point de fixation de la deuxième extrémité 32 de l'élément de retenue 30, fixée à la paroi intérieure du logement 14, est agencé à proximité du milieu du bord inférieur 22 de la trappe d'accès 20. Une telle disposition des points de fixation pour les extrémités 31, 32 de l'élément de retenue 30 peut contribuer à la stabilité de la trappe d'accès 20 lorsque le dispositif d'accès 18 est en position fermée. Lorsque la trappe d'accès 20 est en position fermée, l'élément de retenue 30 peut s'étendre de manière sensiblement parallèle au plan de la trappe d'accès 20.

Lorsque le dispositif d'accès 18 occupe une position ouverte, le poids de la trappe 20 peut exercer une tension sur l'élément de retenue 30. Autrement dit, l'élément de retenue 30 est tendu sous l'effet de la gravité lorsque le dispositif d'accès 18 occupe une position ouverte. Ceci est notamment illustré sur la figure 2. Avantageusement, la disposition des points de fixation pour fixer les extrémités 31, 32 de l'élément de retenue 30 permet d'éloigner la trappe d'accès 20 de l'ouverture 12 lorsque le dispositif d'accès 18 est en position ouverte, sans risquer une perte de ladite trappe d'accès 20.

Divers moyens de fixation peuvent être envisagés pour fixer les extrémités 31, 32 de l'élément de retenue 30 d'une part à la trappe d'accès 20 et d'autre part à la paroi intérieure 16 du logement 14. Ces moyens de fixation peuvent être indémontables, de sorte à permettre une fixation permanente des extrémités 31, 32 de l'élément de retenue 30 à la trappe d'accès 20 et/ou à la paroi intérieure 16 du logement 14. Alternativement, au moins l'un des moyens de fixation peut être démontable, de sorte à permettre une désolidarisation de l'élément de retenue 30. Un tel moyen de fixation démontable peut plus particulièrement être envisagé pour la fixation de la première extrémité 31 de l'élément de retenue 30 à la trappe d'accès 20. Ceci permet notamment de remplacer la trappe d'accès 20 dans le cas où elle est endommagée, par exemple déformée et/ou rayée après un choc.

Selon un mode de réalisation, le dispositif d'accès 18 peut comprendre des clips ou des crochets pour y fixer les extrémités 31, 32 de l'élément de retenue 30. D'autres moyens de fixation permettant de fixer d'une part la première extrémité 31 de l'élément de retenue 30 à la trappe d'accès 20 et d'autre part la deuxième extrémité 32 de l'élément de retenue 30 à la paroi intérieure 16 du logement 14 peuvent être envisagés.

Ainsi, selon un mode de réalisation, la première extrémité 31 et/ou la deuxième extrémité 32 peut comporter un œillet pour fixer l'élément de retenue 30 à la trappe d'accès 20 et/ou à la paroi intérieure 16 du logement 14. Ce mode de réalisation permet de repérer rapidement les extrémités 31, 32 de l'élément de retenue 30 lors d'une manipulation du dispositif d'accès 18. Ce mode de réalisation permet également de démonter l'élément de retenue 30 si nécessaire.

Selon un mode de réalisation, les extrémités 31, 32 de l'élément de retenue 30 peuvent être renforcées. Plus précisément, les extrémités 31, 32 peuvent être surmoulées pour faciliter la coopération desdites extrémités 31, 32 de l'élément de retenue 30 avec les points de fixations sur la trappe d'accès 20 et sur la paroi intérieure 16 du logement 14. En particulier, dans le cas où l'élément de retenue 30 comprend un matériau textile, un surmoulage des extrémités 31, 32 de l'élément de retenue 30 permet de renforcer lesdites extrémités 31, 32 et de faciliter leur coopération avec les points de fixation permettant de fixer la première extrémité 31 à la trappe d'accès 20 et de fixer la deuxième extrémité 32 à la paroi intérieure 16 du logement 14.

En complément et/ou alternativement, une portion intermédiaire 33 située entre les extrémités 31, 32 de l'élément de retenue 30 peut être renforcée. En particulier, dans le cas où la géométrie de la pièce 10 du véhicule est telle que l'élément de retenue 30 entre en contact avec la surface extérieure de ladite pièce 10 lorsque le dispositif d'accès 18 est en position ouverte, la portion intermédiaire 33 de l'élément de retenue 30 susceptible d'entrer en contact avec cette surface extérieure peut être surmoulée pour protéger ladite portion intermédiaire 33 contre une potentielle abrasion et/ou pour protéger la carrosserie contre une dégradation superficielle, telles que des salissures et/ou des rayures par exemple. Ainsi, dans le cas où la portion intermédiaire 33 de l'élément de retenue 30 est par exemple en contact avec le bord de l'ouverture 12 formée dans la paroi de la pièce 10 du véhicule, le surmoulage autour de cette portion intermédiaire 33 protège d'une part l'élément de retenue 30 contre une potentielle abrasion et il protège d'autre part la paroi de la pièce 10 contre une dégradation superficielle.

Comme indiqué précédemment, la trappe d'accès 20 présente une face interne 26 destinée à être orientée vers l'intérieur du logement 14 lorsque le dispositif d'accès 18 est en position fermée. Selon un mode de réalisation préférentiel et optionnel, la trappe d'accès 20 comprend au moins un élément de protection 27 agencé sur ladite face interne 26. Le ou les éléments de protection 27 sont notamment agencés au niveau des bords de la trappe 20. Dans la cas où la trappe d'accès 20 présente une forme polygonale, le ou les éléments de protection 27 sont par exemple agencés au niveau des coins sur la face interne 26.

Le ou les éléments de protection 27 peuvent notamment faire saillie par rapport à la face interne 26 de la trappe d'accès 20, de sorte à instaurer une distance entre la trappe 20 et la pièce 10 du véhicule contre laquelle repose la trappe 20 lorsque le dispositif d'accès 18 se trouve en position ouverte. Ceci est plus particulièrement illustré sur la figure 2.

Le ou les éléments de protection 27 sont configurés pour protéger la surface extérieure de la pièce 10 contre des chocs entre la trappe d'accès 20 et ladite surface lorsque le dispositif d'accès 18 se trouve en position ouverte. Le ou les éléments de protection 27 peuvent par exemple prendre la forme de patins en mousse ou en caoutchouc. D'autres matériaux et/ou d'autres modes de réalisation peuvent être envisagés pour ces éléments de protection 27.

Il est ainsi possible de concevoir un dispositif d'accès 18 pratique, compact, économique et fiable pour une ouverture 12 formée dans une paroi d'une pièce 10 d'un véhicule automobile. Ce dispositif d'accès 18 requiert un nombre limité de pièces 10 et permet d'une part de conserver un aspect esthétique du véhicule automobile lorsque le dispositif d'accès 18 est en position fermée, et d'autre part d'éviter une perte de la trappe d'accès 20 lorsque celle-ci ne recouvre pas l'ouverture 12 formée dans la paroi de la pièce 10 du véhicule, tout en étant très facile à manipuler.

## Revendications

1. Dispositif d'accès (18) pour une ouverture (12) formée dans une paroi d'une pièce (10) d'un véhicule automobile, notamment une paroi de carrosserie, l'ouverture (12) formant un accès vers un logement (14) à l'intérieur de la pièce (10) du véhicule automobile, le dispositif d'accès (18) comprenant :
- une trappe d'accès (20) configurée pour obturer l'ouverture (12) dans la paroi de la pièce (10) du véhicule automobile lorsque le dispositif d'accès (18) est en position fermée, et configurée pour libérer ladite ouverture (12) donnant accès au logement (14) lorsque le dispositif d'accès (18) est en position ouverte;
- un élément de retenue (30) de la trappe d'accès (20), l'élément de retenue (30) comprenant une première extrémité (31) fixée à la trappe d'accès (20) et une deuxième extrémité (32) configurée pour coopérer avec le logement (14) ; le dispositif d'accès (18) étant **caractérisé en ce que** la deuxième extrémité (32) de l'élément de retenue (30) est fixée à une paroi intérieure (16) du logement (14) de sorte que l'élément de retenue (30) soit tendu lorsque le dispositif d'accès (18) est en position fermée.

2. Dispositif d'accès (18) selon la revendication précédente, **caractérisé en ce que** la trappe d'accès (20) présente un bord supérieur (21) et un bord inférieur (22) du côté opposé au bord supérieur (21), et **en ce que** la première extrémité (31) de l'élément de retenue (30) est fixée dans une zone (23) contigüe au bord supérieur (21) de la trappe d'accès (20) et/ou **en ce que** la deuxième extrémité (32) de l'élément de retenue (30) est fixée à la paroi intérieure (16) du logement (14) dans la pièce (10) du véhicule dans une région (24) contigüe au bord de l'ouverture (12).

3. Dispositif d'accès (18) selon la revendication précédente, **caractérisé en ce que** la première extrémité (31) de l'élément de retenue (30) fixée à la trappe d'accès (20) est agencée en vis-à-vis de la deuxième extrémité (32) fixée à la paroi intérieure (16) du logement (14) de sorte qu'en position fermée, l'élément de retenue (30) s'étend dans une zone médiane de la trappe d'accès (20).

4. Dispositif d'accès (18) selon l'une des revendications précédentes, **caractérisé en ce que** l'élément de retenue (30) présente une forme allongée et/ou aplatie.

5. Dispositif d'accès (18) selon l'une des revendications précédentes, **caractérisé en ce que** la trappe d'accès (20) présente une face interne (26) destinée à être orientée vers l'intérieur du logement (14) lorsque le dispositif d'accès (18) est en position fermée et destinée à être orientée vers une face externe de la pièce (10) du véhicule automobile lorsque le dispositif d'accès (18) est en position ouverte, la trappe d'accès (20) comprenant au moins un élément de protection (27) agencée sur ladite face interne (26).

6. Dispositif d'accès (18) selon l'une des revendications précédentes, **caractérisé en ce que** les extrémités (31, 32) de l'élément de retenue (30) et/ou une portion intermédiaire (33) située entre les extrémités (31, 32) de l'élément de retenue (30) sont renforcées.

7. Dispositif d'accès (18) selon l'une des revendications précédentes, **caractérisé en ce que** la première extrémité (31) et/ou la deuxième extrémité (32) de l'élément de retenue (30) présente un œillet configuré pour fixer la ou les extrémités (31, 32) de l'élément de retenue (30).

8. Dispositif d'accès (18) selon l'une des revendications précédentes, **caractérisé en ce que** l'élément de retenue (30) comprend un matériau textile .

9. Dispositif d'accès (18) selon l'une des revendications précédentes, **caractérisé en ce que** l'élément de retenue (30) comprend un matériau polymère tel que du polyoxyméthylène.

10. Véhicule automobile **caractérisé en ce qu'**il comprend une pièce (10) comprenant une paroi dans laquelle est agencée une ouverture (12) formant un accès vers un logement (14) à l'intérieur de la pièce (10) et **en ce qu'**il comprend un dispositif d'accès (18) selon l'une des revendications précédentes pour ladite ouverture (12), la deuxième extrémité (32) de l'élément de retenue (30) étant fixée à une paroi intérieure (16) dudit logement (14) de sorte que l'élément de retenue (30) soit tendu lorsque le dispositif d'accès (18) est en position fermée.
